# FASCICULE DE BREVET EUROPEEN

(11) **EP 3 187 402 B1**
(45) Date de publication et mention de la délivrance du brevet: **07.03.2018**
(21) Numéro de dépôt: 16206989.2
(22) Date de dépôt: 27.12.2016
(51) Int. Cl.: B62K 19/38

(54) **SUPPORT D'ETRIER DE FREIN A DISQUE POUR UNE BICYCLETTE OU SIMILAIRE**
SATTELTRÄGER EINER SCHEIBENBREMSE FÜR EIN FAHRRAD ODER ÄHNLICH
DISC BRAKE CALIPER BRACKET FOR A BICYCLE OR THE LIKE

(30) Priorité: 31.12.2015 FR 1563484
(43) Date de publication de la demande: 05.07.2017
(73) Titulaire: Cycles Lapierre, 21000 Dijon (FR)
(72) Inventeur: LAYES, Hervé, 21000 DIJON (FR)
(74) Mandataire: Gevers SA

(56) Documents cités:
- EP-A1- 2 915 731
- WO-A1-01/44676
- DE-U1-202010 015 144
- US-B1- 6 386 328

## Description

La présente invention se rapporte à un support d'étrier d'un frein à disque, pour une patte de bras arrière d'une bicyclette, tel qu'un VTT ou un VTT à assistance électrique par exemple, permettant d'adapter aisément et rapidement la position de l'axe de la roue arrière en fonction de la hauteur du flanc du pneumatique monté sur la jante arrière, et à une bicyclette comportant une telle patte de bras arrière.

Dans le domaine du vélo, il est bien connu des systèmes de fixation de la roue comportant une attache rapide solidaire des extrémités du moyeu de la roue, lesdites extrémités du moyeu étant aptes à être insérées dans des pattes en forme générale de U s'étendant à l'extrémité de la fourche ou du bras arrière du vélo. En outre, la patte arrière permet généralement la connexion de l'étrier de frein arrière.

Usuellement, les dimensions et la forme de la patte arrière sont conçues pour recevoir un axe de roue spécifique de la gamme des différents axes de roues disponibles sur le marché et/ou pour recevoir une roue spécifique, c'est-à-dire une jante sur laquelle est monté un pneumatique, spécifique de la gamme des différentes roues disponibles sur le marché.

De nombreux systèmes ont déjà été imaginés pour permettre, pour un même cadre de vélo, un réglage de la tension de la chaîne et/ou de recevoir des roues de différents diamètres. C'est le cas notamment des demandes de brevet US 2014/0049020 et US 2015/145231.

Le document US 2014/0049020 décrit un insert pour bicyclette comportant une partie centrale et une partie périphérique contigüe pour former un corps unitaire allongé, de forme sensiblement rectangulaire ou oblong, la partie périphérique formant un rebord. Ledit corps comprend une première surface extérieure définie par la partie centrale et une seconde surface extérieure opposée définie par la partie centrale et la partie périphérique. Ladite partie centrale comprend un trou traversant excentré par rapport au plan de symétrie du corps qui est apte à être introduit dans un trou pratiqué sur le bras de la bicyclette, la partie périphérique du corps prenant appui sur le bord dudit trou pratiqué dans le bras.

Le document US 2015/145231 décrit une bicyclette comprenant un cadre qui est spécifiquement conçu pour accueillir différentes configurations d'axe. La bicyclette comporte une roue comprenant un axe de roue et un cadre de bicyclette comprenant un support de roue incluant une ouverture d'axe ayant une première largeur et une fente dite d'axe contigüe avec l'ouverture d'axe et ayant une seconde largeur inférieure à la première largeur. Une partie de l'axe de roue disposée dans l'ouverture d'axe a un diamètre qui correspond sensiblement à la première largeur. Pour changer la roue d'origine par une roue dite de remplacement ayant un moyeu de remplacement qui a un axe de remplacement, ladite roue d'origine est retirée, une pièce dite convertisseur est positionnée dans l'ouverture d'axe, puis l'axe de remplacement est glissé à travers la fente de l'essieu et dans la zone de réception définie par le convertisseur.

Tous ces systèmes bien que permettant de recevoir de différents diamètres, ne permettent pas d'adapter la position de l'étrier de frein par rapport aux différentes positions du disque de frein qui est solidaire du moyeu de la roue arrière, ce qui grève l'efficacité du freinage.

On connait également le document DE202010015144 qui décrit un adaptateur de frein à disque comportant deux branches parallèles reliées dans leur partie médiane par une entretoise. Les extrémités supérieures des branches comportent des trous taraudés pour fixer le frein à disque et les extrémités inférieures desdites branches comportent respectivement un trou oblong à travers lesquels des vis de fixation sont vissés sur la paroi intérieure d'un bras arrière d'un cadre de bicyclette muni de deux trous filetés.

Toutefois, les axes longitudinaux des trous oblongs ne sont pas parallèles de sorte qu'ils ne permettent pas d'adapter la position de l'étrier en fonction de la position de l'axe de la roue arrière sur la patte de bras arrière.

L'un des buts de l'invention est donc de remédier à ces inconvénients en proposant un support d'étrier de frein à disque de conception simple et peu onéreuse, permettant un réglage rapide et aisé de la position de l'étrier de frein en fonction de la position de l'axe de la roue arrière sur la patte de bras arrière de la bicyclette.

A cet effet et conformément à l'invention, il est proposé un support d'étrier d'un frein à disque pour bicyclette ou similaire, constitué d'une pièce en forme générale de U comprenant une embase, une première branche s'étendant à une première extrémité de ladite embase, une seconde branche s'étendant à l'extrémité opposée de ladite embase, les extrémités libres de la première et seconde branche comportant des moyens de solidarisation de l'étrier; ledit support est remarquable en ce qu'il comprend deux paires de trous traversant pratiquées à chacune des extrémités de ladite embase, une première paire de trous s'étendant le long d'une droite qui est parallèle à la droite passant par les trous de la seconde paire de trous, et ledit support étant destiné à être solidarisé sur la paroi dite intérieure d'un bras arrière d'un cadre de bicyclette muni de deux trous traversant, la paroi intérieure étant la paroi du bras arrière qui fait droit au plan sagittal du cadre.

On comprend bien que le support d'étrier permet de régler rapidement et aisément la position de l'étrier du frein à disque en vissant le support d'étrier sur le bras arrière au moyen de l'un des trous de chaque paire de trous de l'étrier.

Par ailleurs, la première branche dite proximale est sensiblement rectiligne et forme avec l'embase un angle α compris entre 50 et 90°.

De plus, la seconde branche dite distale comporte deux tronçons, un premier tronçon formant avec l'embase un angle compris entre 30 et 60° et un second tronçon formant avec l'embase un angle compris entre 80 et 100°.

De préférence, le second tronçon de la branche distale et la branche proximale s'étendent sensiblement parallèlement.

Par ailleurs, les moyens de solidarisation consistent en un trou taraudé pratiqué à l'extrémité libre des branches proximale et respectivement distale.

Un autre objet de l'invention concerne un bras arrière destiné à un véhicule tel qu'une bicyclette, une moto ou analogue, comprenant au moins un support d'étrier de frein à disque selon l'invention.

Un dernier objet de l'invention concerne un cadre de bicyclette ou analogue comportant au moins un tube de selle, un tube oblique, au moins un bras arrière apte à porter une roue dite motrice, et au moins un étrier de frein à disque selon l'invention.

D'autres avantages et caractéristiques ressortiront mieux de la description qui va suivre, d'une unique variante d'exécution, donnée à titre d'exemple non limitatif, du support d'étrier d'un frein à disque de bicyclette suivant l'invention, à partir des dessins annexés sur lesquels :
- la figure 1 est une vue de côté d'une bicyclette du type à assistance électrique comportant une patte de bras arrière et un support d'étrier de frein conforme à l'invention,
- la figure 2 est une vue en perspective éclatée de la patte de bras arrière munie du support d'étrier conforme à l'invention,
- la figure 3 est une vue en perspective de la patte de bras arrière munie du support d'étrier conforme à l'invention,
- la figure 4 est une autre vue en perspective de la patte arrière de bras arrière munie du support d'étrier conforme à l'invention,
- la figure 5 est une vue de côté du support d'étrier d'un frein à disque conforme à l'invention.

On décrira ci-après un support d'étrier d'un frein à disque suivant l'invention pour un vélo tout terrain, dit VTT, à point de pivot virtuel et à assistance électrique ; toutefois, il est bien évident que le support d'étrier pourrait être utilisé pour tout type de bicyclette à assistance électrique ou non sans pour autant sortir du cadre de l'invention.

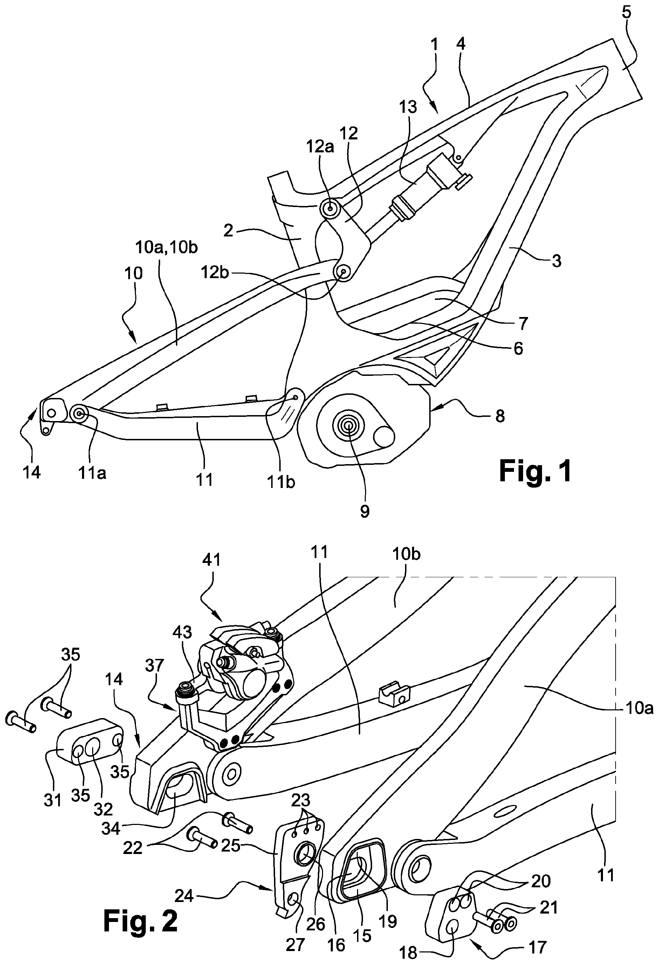

En référence à la figure 1, le cadre 1 de vélo suivant l'invention présente une forme triangulée et est constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement à un tube de fourche 5 globalement vertical, le tube oblique 3 étant, par ailleurs, solidarisé audit tube de fourche 5 également par soudage. Ce tube de fourche 5 reçoit une fourche de type télescopique, non représentée sur la figure 1, portant à son extrémité inférieure l'axe du moyeu de la roue avant du VTT. Un guidon est de manière classique solidarisé à l'extrémité distale d'une potence solidaire de l'extrémité supérieure de la fourche pour assurer la direction du VTT, le guidon et la potence n'étant également pas représentés sur la figure 1. De plus, le tube de selle 2 est apte à recevoir une tige de selle, non représentée sur la figure 1, comprenant à son extrémité supérieure une selle sur laquelle prend position le cycliste.

Il va de soi que les différents tubes de selle 2, oblique 3, horizontal 4 et de fourche 5 du cadre 1 peuvent être assemblés par tout moyen approprié bien connu de l'homme du métier tel que par collage et/ou par emboîtement par exemple sans pour autant sortir du cadre de l'invention.

L'extrémité inférieure dudit tube de selle 2, c'est-à-dire l'intersection du tube oblique 3 et dudit tube de selle 2, comporte une plateforme 6 sensiblement horizontale recevant sur sa face supérieure une batterie 7 alimentant un moteur électrique 8 positionné sous ladite plateforme et en prise avec un boitier de pédalier 9 portant de manière classique l'axe des pignons menant, non représentés sur la figure 1, communément appelés plateaux dont les axes de rotation sont coaxiaux. Des pédales, non représentées sur la figure 1, sont solidaires de l'axe des pignons menant de part et d'autre du cadre 1 du VTT.

Ledit VTT comporte, par ailleurs, un bras oscillant 10 constitué de deux haubans 10a,10b s'étendant de part et d'autre du plan médian du cadre 1, lesdits haubans 10a,10b étant reliés par une ou plusieurs entretoises non représentées sur la figure 1.

Ledit bras oscillant 10 est solidarisé au cadre 1 par deux moyens d'articulation 11 et 12. Le premier moyen d'articulation dit inférieur 11 consiste en une biellette dite inférieure dont les axes de rotation 11a et 11b positionnés aux extrémités libres de ladite biellette 11 sont respectivement articulés à l'extrémité distale du bras oscillant 10 et au tube de selle 2 au niveau de la plateforme 6, à proximité du boitier de pédalier 9. Cette biellette inférieure 11 s'étend globalement horizontalement à l'arrière du tube de selle 2 du cadre 1 du VTT lorsque ce dernier est en position d'équilibre statique, c'est-à-dire lorsqu'un cycliste de poids moyen prend position sur la selle du VTT. Le second moyen d'articulation dit supérieur 12 consiste en une biellette dite supérieure 12 dont les axes 12a et 12b sont articulés à l'extrémité proximale du bras oscillant 10 et respectivement au tube horizontal 4 à proximité du tube de selle 2 du cadre 1. Cette biellette supérieure 12 s'étend globalement verticalement entre le tube de selle 2 et le tube oblique, en dessous du tube horizontal 4, du cadre 1 du VTT lorsque ce dernier est en position d'équilibre statique. De plus, le VTT comprend un amortisseur 13 dont les extrémités libres sont solidaires respectivement du tube horizontal 4 et de la biellette supérieure 12.

Il est bien évident que l'amortisseur 13 pourra être solidaire du tube oblique sans pour autant sortir du cadre de l'invention. Par ailleurs, il est bien évident que le bras oscillant 10 pourra présenter une forme quelconque telle qu'une forme triangulaire par exemple et que le bras oscillant pourra être substitué par un bras rigide, non articulé au cadre, pour former un vélo dit rigide et non un vélo du type tout suspendu sans pour autant sortir du cadre de l'invention.

En référence aux figures 2 à 4, le bras oscillant 10 comporte à son extrémité distale, c'est-à-dire l'extrémité du bras 10 située la plus en arrière du vélo, une patte de bras arrière 14 apte à porter l'axe du moyeu de la roue arrière motrice du vélo, non représentée sur les figures.

La patte de bras arrière 14 comporte, au niveau du premier hauban 10a, un évidement 15 pratiqué sur la paroi extérieure du premier hauban 10a, c'est-à-dire la paroi du hauban 10a s'étendant à l'opposée de la paroi dite intérieure qui fait droit au plan sagittal du cadre 1, un jour 16 de forme sensiblement oblongue pratiqué dans le fond dudit évidement 15 et débouchant sur la paroi intérieure dudit hauban 10a, une pièce 17 dite adaptateur de forme complémentaire à la forme de l'évidement 15, apte à être positionnée dans ledit évidement 15 en prenant appui sur le fond, et comportant au moins un trou taraudé 18 excentré par rapport au plan médian dudit adaptateur 17, ledit trou taraudé 18 étant destiné à recevoir le filetage de l'axe du moyeu de la roue arrière. Dans cet exemple particulier de réalisation, l'évidement et l'adaptateur présentent une forme trapézoïdale ; toutefois, il est bien évident que l'évidement et l'adaptateur pourront présenter une forme quelconque telle qu'une forme oblongue ou polygonale sans pour autant sortir du cadre de l'invention.

Par ailleurs, ladite patte de bras arrière 14 comprend des moyens de fixation pour solidariser ledit adaptateur 17 au bras arrière 10. Lesdits moyens de fixation consistent en deux trous traversant 19 pratiqués dans le fond de l'évidement 15 et deux trous traversant 20 pratiqués dans l'adaptateur 17 et aptes à recevoir des douilles taraudées 21, c'est-à-dire des douilles comportant un taraudage interne, destinées à coopérer avec des vis 22 traversant deux trous parmi trois trous 23 traversant pratiqués dans une patte de dérailleur 24. Accessoirement, les bords des trous traversant 20 de l'adaptateur 17 comportent un chanfrein afin d'éviter que les têtes des douilles taraudées 21 ne fassent saillie dudit adaptateur 17.

En référence aux figures 2 à 4, ladite patte de dérailleur 24 comprend un corps 25 en forme générale de triangle rectangle comportant un premier trou dit supérieur 26 apte à recevoir l'extrémité du moyeu de la roue arrière et un second trou dit inférieur 27 formant un oeillet de couplage, ledit corps 25 comportant au niveau du trou supérieur 26 un évidement 28 débouchant sur l'un des côtés du corps 25 et formant une paroi de fond 29 sensiblement perpendiculaire à l'axe du trou supérieur 26 et une paroi latérale 30 s'étendant parallèlement à l'axe du trou supérieur 26. Au dessus du trou supérieur 26, le corps 25 comporte trois trous 23 alignés et équidistants, lesdits trous 23 étant aptes à recevoir deux vis 22 coopérant avec les douilles taraudées 21 comme on l'a vu précédemment. Ladite patte de dérailleur peut consister par exemple dans la patte de dérailleur décrite dans la demande de brevet français FR de la demanderesse ; Toutefois, il est bien évident que la patte de dérailleur pourra consister dans toute autre patte de dérailleur bien connu de l'homme du métier sans pour autant sortir du cadre de l'invention.

De plus, en référence aux figures 2 à 4, la patte de bras arrière 14 comporte un second adaptateur 31 constitué d'une pièce comportant un trou traversant 32 excentré par rapport au plan médian dudit adaptateur 31, ledit trou 32 étant apte à recevoir l'axe du moyeu de la roue arrière, un second évidement 33 pratiqué sur la paroi extérieure d'un second bras arrière 10b, c'est-à-dire la paroi du second bras arrière 10b s'étendant à l'opposée de la paroi dite intérieure qui fait droit au plan sagittal du cadre, et un jour 34 de forme sensiblement oblongue pratiqué dans le fond dudit évidement 33 et débouchant sur la paroi intérieure dudit second bras arrière 10b.

La distance entre le centre du trou traversant 32 du second adaptateur 31 et le plan médian dudit second adaptateur 32 est égale à la distance entre le centre du trou taraudé 18 du premier adaptateur 17 et le plan médian dudit premier adaptateur 17.

Dans cet exemple de réalisation, le second adaptateur 31 et le second évidement 33 recevant ledit second adaptateur 31 présentent une forme polygonale et, de préférence, une forme rectangulaire ; toutefois, il va de soi que ledit second adaptateur 31 et l'évidement 33 le recevant pourront présenter une forme quelconque sans pour autant sortir du cadre de l'invention.

Par ailleurs, des moyens de fixation sont prévus pour solidariser ledit second adaptateur 31 au second bras arrière 10b. Lesdits moyens de fixation consistent en deux trous taraudés pratiqués dans le fond du second évidement 32, lesdits trous taraudés n'étant pas visibles sur les figures, et deux trous traversant 35 pratiqués dans le second adaptateur 31 et aptes à recevoir des vis 36 destinées à coopérer avec lesdits trous taraudés. Accessoirement, les bords des trous traversant 35 comportent un chanfrein afin d'éviter que les têtes des vis 36 ne fassent saillie du second adaptateur 31.

On comprend bien que la patte de bras arrière suivant l'invention permet d'adapter aisément et rapidement la position de l'axe du moyeu de la roue arrière. A cet effet, il suffit de retourner les premier 17 et second 31 adaptateur en les faisant pivoter autour d'un axe vertical et d'adapter la position de la patte de dérailleur 24 sur le premier adaptateur 17, l'adaptation de la position de la patte de dérailleur 24 sur le premier adaptateur se faisant simultanément à la fixation dudit premier adaptateur dans son évidement 15.

Afin de permettre le réglage de la position de l'étrier du frein à disque, le disque de frein étant solidaire du moyeu de la roue arrière non représentée sur les figures, un support d'étrier 37 est solidarisé sur la paroi intérieure du second bras arrière 10b.

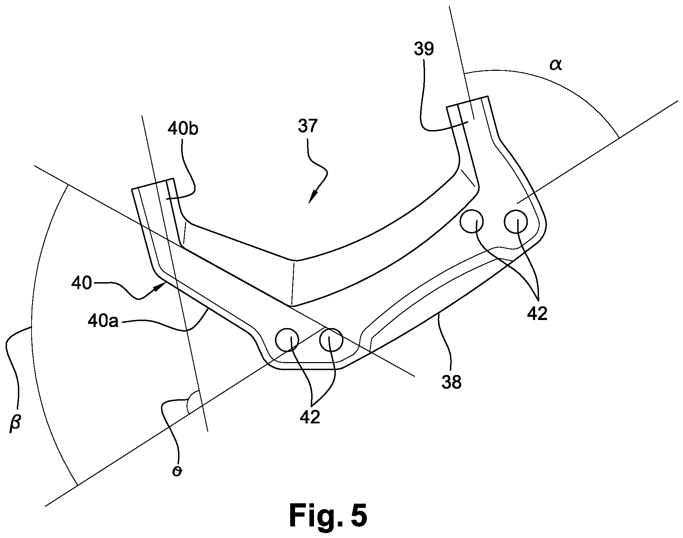

En référence aux figures 2 à 5, ledit support d'étrier 37 est constitué d'une pièce en forme générale de U comprenant une embase 38, une première branche 39 s'étendant à une première extrémité de ladite embase 38, une seconde branche 40 s'étendant à l'extrémité opposée de ladite embase 38, les extrémités libres de la première 39 et seconde 40 branche comportant des moyens de solidarisation de l'étrier 41 du frein à disque, et deux paires de trous 42 traversant pratiqués à chacune des extrémités de ladite embase 38. Une première paire de trous 42 s'étend le long d'une droite qui est parallèle à la droite passant par les trous 42 de la seconde paire de trous 42 et la distance séparant deux trous 42 de chaque paire correspond à l'écartement entre les deux positions de l'axe du moyeu de la roue arrière recherchées. L'étrier 41 du frein à disque consiste dans tout type d'étrier de frein à disque bien connu de l'homme du métier tel que les étriers de frein à disque commercialisé par la société Shimano et décrits dans les demandes de brevet américain US2015210345, US2015183488 ou US 2014083805 par exemple. Par ailleurs, la première branche dite proximale 38 est sensiblement rectiligne et forme avec l'embase 38 un angle α compris entre 50 et 90°. Dans cet exemple particulier, la branche proximale 39 forme avec l'embase 38 un angle α d'environ 80°. De plus, la seconde branche dite distale 40 comporte deux tronçons, un premier tronçon 40a formant avec l'embase 38 un angle β compris entre 30 et 60°, en l'espèce un angle β d'environ 50°, et un second tronçon 40b formant avec l'embase 38 un angle θ compris entre 90 et 120°, en l'espèce un angle θ d'environ 100°. Ainsi, de préférence, le second tronçon 40b de la branche distale 40 et la branche proximale 39 s'étendent sensiblement parallèlement. Par ailleurs, les moyens de solidarisation de l'étrier de frein 41 sur le support d'étrier 37 consistent en un trou taraudé pratiqué à l'extrémité libre des branches proximale 39 et respectivement distale 40, lesdits trous taraudés n'étant pas représentés sur les figures. Ainsi, la bride 43 de l'étrier de frein 41 est fixée aux extrémités des branches 39 et 40 du support d'étrier 37.

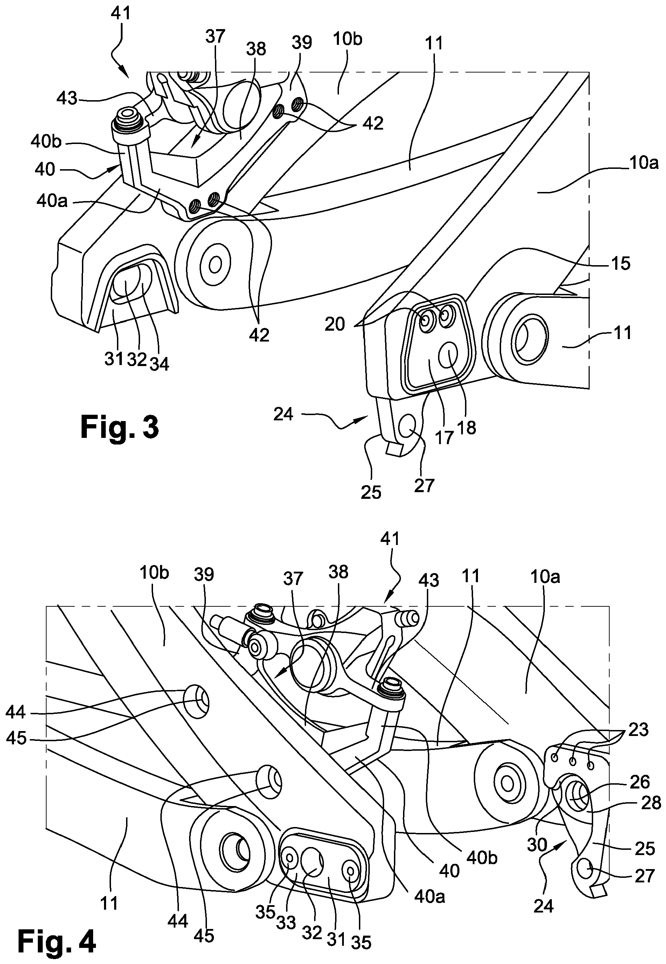

En référence à la figure 4, ledit support d'étrier 37 est solidarisé sur la paroi dite intérieure du bras arrière 10b du cadre 1 de bicyclette, ledit bras arrière étant muni de deux trous traversant 44, au moyen de vis 45.

On comprend bien que le support d'étrier 37 permet de régler rapidement et aisément la position de l'étrier 41 du frein à disque en vissant le support d'étrier 37 sur le bras arrière au moyen de l'un des trous 42 de chaque paire de trous 42 de l'étrier. On notera également que la fixation du support d'étrier 37 dans la position appropriée s'effectue depuis la paroi extérieure du bras arrière 10b de sorte qu'il n'est pas nécessaire de retirer la roue pour effectuer le réglage.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Support (37) d'étrier (41) d'un frein à disque pour bicyclette ou similaire, constitué d'une pièce en forme générale de U comprenant une embase (38), une première branche (39) s'étendant à une première extrémité de ladite embase (38), une seconde branche (40) s'étendant à l'extrémité opposée de ladite embase (38), les extrémités libres de la première (39) et seconde (40) branche comportant des moyens de solidarisation de l'étrier (41), **caractérisé en ce qu'**il comporte deux paires de trous (42) traversant pratiquées à chacune des extrémités de ladite embase (38), une première paire de trous (42) s'étendant le long d'une droite qui est parallèle à la droite passant par les trous (42) de la seconde paire de trous (42), et ledit support (37) étant destiné à être solidarisé sur la paroi dite intérieure d'un bras arrière (10b) d'un cadre (1) de bicyclette muni de deux trous traversant (44), la paroi intérieure étant la paroi du bras arrière (10) qui fait droit au plan sagittal du cadre (1).

2. Support d'étrier suivant la revendication 1 **caractérisé en ce que** la première branche dite proximale (39) est sensiblement rectiligne et forme avec l'embase un angle α compris entre 50 et 90°.

3. Support d'étrier suivant l'une quelconque des revendications 1 ou 2 **caractérisé en ce que** la seconde branche dite distale (40) comporte deux tronçons, un premier tronçon (40a) formant avec l'embase (38) un angle β compris entre 30 et 60° et un second tronçon (40b) formant avec l'embase (38) un angle θ compris entre 80 et 100°.

4. Support d'étrier suivant la revendication 3 **caractérisé en ce que** le second tronçon (40b) de la branche distale (40) et la branche proximale (39) s'étendent sensiblement parallèlement.

5. Support d'étrier suivant l'une quelconque des revendications 1 à 4 **caractérisé en ce que** les moyens de solidarisation consistent en un trou taraudé pratiqué à l'extrémité libre des branches proximale (39) et respectivement distale (40).

6. Bras arrière (10) destiné à un véhicule tel qu'une bicyclette, une moto ou analogue, comprenant au moins un support (37) d'étrier (41) de frein à disque selon l'une quelconque des revendications 1 à 5.

7. Cadre (1) de bicyclette ou analogue comportant au moins un tube de selle (2), un tube oblique (3), au moins un bras arrière (10) apte à porter une roue dite motrice, et au moins un support (37) d'étrier (41) de frein à disque selon l'une quelconque des revendications 1 à 5.

## Patentansprüche

1. Träger (37) eines Sattels (41) einer Scheibenbremse für Fahrrad oder ähnliches, gebildet von einem Teil in allgemeiner U-Form, umfassend eine Auflage (38), einen ersten Schenkel (39), der sich an einem ersten Ende der Auflage (38) erstreckt, einen zweiten Schenkel (40), der sich am gegenüberliegenden Ende der Auflage (38) erstreckt, wobei die freien Enden des ersten (39) und zweiten (40) Schenkels Verbindungsmittel des Sattels (41) aufweisen, **dadurch gekennzeichnet, dass** er zwei durchgehende Paare Löcher (42) aufweist, die an jedem der Enden der Auflage (38) eingearbeitet sind, wobei sich ein erstes Paar Löcher (42) entlang einer Geraden erstreckt, die zu der Geraden parallel ist, die durch die Löcher (42) des zweiten Paars Löcher (42) verläuft, und wobei der Träger (37) bestimmt ist, mit der Innenwand eines hinteren Arms (10b) eines Fahrradrahmens (1), der mit zwei durchgehenden Löchern (44) ausgestattet ist, fest verbunden zu sein, wobei die Innenwand die Wand des hinteren Arms (10) ist, die gerade zur sagittalen Ebene des Rahmens (1) ist.

2. Sattelträger nach Anspruch 1, **dadurch gekennzeichnet, dass** der proximale erste Schenkel (39) etwa gerade ist und mit der Auflage einen Winkel α zwischen 50 und 90° inklusive bildet.

3. Sattelträger nach einem der Ansprüche 1 oder 2, **dadurch gekennzeichnet, dass** der distale zweite Schenkel (40) zwei Abschnitte aufweist, einen ersten Abschnitt (40a), der mit der Auflage (38) einen Winkel β zwischen 30 und 60° inklusive bildet, und einen zweiten Abschnitt (40b), der mit der Auflage (38) einen Winkel θ zwischen 80 und 100° inklusive bildet.

4. Sattelträger nach Anspruch 3, **dadurch gekennzeichnet, dass** sich der zweite Abschnitt (40b) des distalen Schenkels (40) und der proximale Schenkel (39) etwa parallel erstrecken.

5. Sattelträger nach einem der Ansprüche 1 bis 4, **dadurch gekennzeichnet, dass** die Verbindungsmittel aus einem gewindeten Loch bestehen, das am freien Ende des jeweils proximalen (39) und distalen (40) Schenkels eingearbeitet ist.

6. Hinterer Arm (10), der für ein Fahrzeug wie ein Fahrrad, ein Motorrad oder ähnliches bestimmt ist, umfassend mindestens einen Träger (37) eines Sattels (41) einer Scheibenbremse nach einem der Ansprüche 1 bis 5.

7. Rahmen (1) eines Fahrrads oder ähnlichen, aufweisend mindestens ein Sattelrohr (2), ein schräges Rohr (3), mindestens einen hinteren Arm (10), der imstande ist, ein Antriebsrad zu tragen, und mindestens einen Träger (37) eines Sattels (41) einer Scheibenbremse nach einem der Ansprüche 1 bis 5.

## Claims

1. A caliper (41) carrier (37) of a disc brake for a bicycle or the like, made up of a generally U-shaped part comprising a base (38), a first branch (39) extending at a first end of said base (38), a second branch (40) extending at the opposite end of said base (38), the free ends of the first (39) and second (40) branches including means for securing to the caliper (41), **characterized in that** it includes two pairs of through holes (42) formed at each of the ends of said base (38), a first pair of holes (42) extending along a straight line that is parallel to the straight line passing through the holes (42) of the second pair of holes (42), and said carrier (37) being intended to be secured on the so-called inner wall of a rear arm (10b) of a bicycle frame (1) provided with two through holes (44), the inner wall being the wall of the rear arm (10) that is aligned with the sagittal plane of the frame (1).

2. The caliper carrier according to claim 1, **characterized in that** the first so-called proximal branch (39) is substantially rectilinear and forms, with the base, an angle α comprised between 50 and 90°.

3. The caliper carrier according to any one of claims 1 or 2, **characterized in that** the second so-called distal branch (40) includes two segments, a first segment (40a) forming, with the base (38), an angle β comprised between 30 and 60° and a second segment (40b) forming, with the base (38), an angle θ comprised between 80 and 100°.

4. The caliper carrier according to claim 3, **characterized in that** the second segment (40b) of the distal branch (40) and the proximal branch (39) extend substantially parallel.

5. The caliper carrier according to any one of claims 1 to 4, **characterized in that** the securing means consist of a tapped hole formed at the free end of the proximal (39), and respectively distal (40), branches.

6. A rear arm (10) intended for a vehicle such as a bicycle, a motorcycle or the like, comprising at least one caliper (41) carrier (37) of a disc brake according to any one of claims 1 to 5.

7. A bicycle frame (1) or the like including at least one seat tube (2), a downtube (3), at least one rear arm (10) able to carry a so-called drive wheel, and at least one disc brake caliper (41) carrier (37) according to any one of claims 1 to 5.
